(19) Europäisches Patentamt

European Patent Office

Office européen des brevets

(11) **EP 2 092 539 B1**

(12) **FASCICULE DE BREVET EUROPEEN**

(45) Date de publication et mention
de la délivrance du brevet:
**03.10.2012  Bulletin 2012/40**

(21) Numéro de dépôt: **07870364.2**

(22) Date de dépôt: **30.11.2007**

(51) Int Cl.:
***H01G 9/058*** *(2006.01)*

(86) Numéro de dépôt international:
**PCT/FR2007/001969**

(87) Numéro de publication internationale:
**WO 2008/071888 (19.06.2008 Gazette 2008/25)**

(54) **UN CONDENSATEUR ELECTROCHIMIQUE AVEC DEUX ELECTRODES EN CARBONE DE NATURE DIFFERENTE EN MILIEU AQUEUX**

ELEKTROCHEMISCHER KONDENSATOR MIT ZWEI KOHLENSTOFFELEKTRODEN MIT VERSCHIEDENEN EIGENSCHAFTEN IN EINEM WÄSSRIGEN MEDIUM

ELECTROCHEMICAL CAPACITOR WITH TWO CARBON ELECTRODES HAVING DIFFERENT CHARACTERISTICS IN AN AQUEOUS MEDIUM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **30.11.2006  FR 0610483**

(43) Date de publication de la demande:
**26.08.2009  Bulletin 2009/35**

(73) Titulaires:
• **Centre National de la Recherche Scientifique (CNRS)**
**75016 Paris (FR)**
• **Universite D'Orleans**
**45067 Orleans Cedex 2 (FR)**

(72) Inventeurs:
• **BEGUIN, François**
**45160 Olivet (FR)**
• **KHOMENKO, Volodymyr**
**Kiev 03164 (UA)**
• **RAYMUNDO-PINERO, Encarnacion**
**45100 Orleans (FR)**

(74) Mandataire: **Jacobson, Claude**
**Cabinet Lavoix**
**2, Place d'Estienne d'Orves**
**75441 Paris Cedex 09 (FR)**

(56) Documents cités:
**EP-A2- 1 085 541     US-A- 4 251 568**

EP 2 092 539 B1

**Description**

La présente invention concerne un condensateur électrochimique comportant deux électrodes en carbone et un électrolyte aqueux situé à l'interface des deux électrodes ainsi qu'un procédé de fabrication du condensateur.

Un condensateur électrochimique est ici un dispositif permettant de stocker l'énergie électrique provenant de la séparation d'espèces chargées et/ou de réactions d'oxydoréduction.

Il est connu d'utiliser des condensateurs électrochimiques à double couche où les espèces chargées sont séparées à l'interface électrode/électrolyte. L'énergie électrique est ainsi stockée sous forme électrostatique par séparation de charges.

Ainsi, le brevet US 2 800 616 décrit un condensateur comportant deux électrodes identiques en carbone poreux et un électrolyte inorganique aqueux tel qu'une solution de chlorure d'ammonium ($NH_4Cl$) ou une solution d'acide sulfurique ($H_2SO_4$).

Il est aussi connu d'utiliser des condensateurs à double couche comportant des électrodes en carbone activé. Ainsi, le brevet US 3 288 641 décrit un condensateur à double couche comportant deux électrodes en carbone activé traité par des métaux ou des halogénures métalliques. Le brevet US 4 313 084 divulgue deux électrodes comprenant une même pâte formée par du carbone activé mélangé avec de l'acide sulfurique. Enfin, le brevet US 4 562 511 décrit un condensateur dont une électrode est en carbone activé et l'autre électrode est constituée de métal conducteur. Le document US-A-4251568 décrit un élément de stockage d'énergie comportant des électrodes à base de carbone traitées avec de l'acide nitrique.

L'électrolyte employé dans ce type de condensateur est aqueux ou organique. L'électrolyte aqueux conduit à une assez faible densité d'énergie car la tension de fonctionnement maximale est d'environ 0,6 à 0,7 V.

En effet, la densité d'énergie (E) est proportionnelle à la capacitance (C) et au carré de la tension de fonctionnement (U) comme le montre la formule générale suivante :

$$E = \frac{1}{2} * C * U^2$$

La tension de fonctionnement maximale avec un électrolyte de type organique est en général autour de 2,3 à 2,5 V. Ainsi, les électrolytes organiques sont habituellement privilégiés pour obtenir une meilleure densité d'énergie.

La puissance délivrée (P) par le condensateur est proportionnelle au carré de la tension (U) mais inversement proportionnelle à la résistance série ($R_s$), comme le montre la formule suivante:

$$P = \frac{U^2}{4 * R_s}$$

La résistance série ($R_s$) correspond à la somme de toutes les résistances imposées par les éléments constituant le condensateur, dont en particulier l'électrolyte. Or les électrolytes aqueux ont une conductivité plus élevée que celle des électrolytes organiques. A titre d'exemple, la conductivité d'une solution 1 M de $H_2SO_4$ est d'environ 0,02 S.$cm^{-1}$, et celle d'une solution organique d'environ 1 S.$cm^{-1}$. La contribution de la résistance série implique donc une puissance délivrée en présence d'électrolyte aqueux en général plus importante qu'en présence d'électrolyte organique.

En conséquence, les condensateurs électrochimiques ne présentent pas à la fois une puissance délivrée importante et une densité d'énergie importante.

Un but de la présente invention est de fournir un condensateur électrochimique de capacité et de tension de fonctionnement élevées en milieu aqueux, engendrant ainsi une densité d'énergie et une puissance délivrée plus importantes.

A cet effet, selon un premier aspect, l'invention a pour objet un condensateur électrochimique comportant une première électrode et une deuxième électrode comprenant chacune du carbone et un électrolyte aqueux situé à l'interface des deux électrodes, caractérisé en ce que la surface du carbone de la première électrode présente un taux atomique de fonctionnalisation multiplié par un facteur égal à au moins 2 par rapport au taux atomique de fonctionnalisation de la surface du carbone de la deuxième électrode.

Une surface de carbone est dite « fonctionnalisée » lorsque cette surface présente des hétéroatomes liés à un ou plusieurs atomes de carbone. Les hétéroatomes sont ici des atomes appartenant à la famille des chalcogènes ou des pnictogènes, notamment O, N, S ou P. Selon un mode de réalisation préféré, la surface du carbone est fonctionnalisée par des fonctions oxygénées, azotées, soufrées et/ou phosphorées.

Le taux atomique de fonctionnalisation est déterminé ici par la somme des taux atomiques des hétéroatomes liés à un ou plusieurs atomes de carbone et présents à la surface du carbone.

Selon un mode de réalisation préféré, la surface du carbone de la première électrode comporte au moins deux fois plus de fonctions oxygénées que la surface du carbone de la deuxième électrode. Une fonction oxygénée correspond ici à un atome d'oxygène engagé dans une liaison simple avec un ou deux atomes de carbone, formant par exemple des fonctions phénoliques ou éthérées, dans une liaison double avec un atome de carbone formant par exemple des fonctions quinoniques, ou à la fois dans des liaisons doubles et simples formant par exemple des fonctions carboxyliques ou lactoniques.

De préférence, la masse en carbones des deux électrodes est sensiblement identique.

En fonctionnement, le condensateur est relié soit à une source de courant, permettant la charge du condensateur, soit à un système auquel il doit délivrer les charges stockées, permettant la décharge du condensateur.

Lors de la charge, la première électrode comportant un taux atomique de fonctionnalisation plus important est alors reliée à la borne positive de la source de courant et cette électrode est de ce fait nommée « électrode positive ». La deuxième électrode est, quant à elle, reliée à la borne négative et est nommée « électrode négative ». Lors de la décharge, le condensateur est relié au système alimenté auquel il délivre un courant.

En premier lieu, le condensateur selon l'invention présente une plus grande capacité que celle des condensateurs symétriques comportant deux électrodes identiques en carbone.

En effet, deux phénomènes de nature différente se produisent au niveau de chaque électrode lors du fonctionnement en charge et/ou en décharge du condensateur permettant d'augmenter la capacité du condensateur selon l'invention. La capacité du condensateur est ainsi comprise entre 180 et 320 $F.g^{-1}$ (gramme de matériau carboné des électrodes).

Lors de la charge, les ions présents dans l'électrolyte sont fixés de manière électrostatique à la surface de chaque électrode comme c'est le cas des condensateurs symétriques à double couche. Cependant un autre phénomène se produit en plus de ce phénomène électrostatique. En effet, les deux électrodes sont également impliquées dans des réactions pseudo-faradiques de nature différente. Cette contribution est connue sous le nom de pseudo-capacité. Les réactions pseudo-faradiques se produisent dans des gammes de potentiels différentes. A titre d'exemple, lors de la charge à pH = 0, les réactions d'oxydoréduction se produisent au niveau de la deuxième électrode à environ -0,9 V vs $Hg/Hg_2SO_4$ alors qu'au niveau de la première électrode, elles se produisent à environ -0,1 V vs $Hg/Hg_2SO_4$. A titre d'exemple, les réactions d'oxydoréduction se déroulant au niveau du pôle positif du condensateur sont susceptibles de faire intervenir les couples quinone/hydroquinone pour les fonctions oxygénées et les couples de fonctions $C=NH/CH-NH_2$ et $C-NHOH/C-NH_2$ pour les fonctions azotées, alors qu'au niveau du pôle négatif, les réactions d'oxydoréduction font intervenir la décomposition de l'eau et la sorption de l'hydrogène naissant dans le carbone.

Lors de la décharge, les réactions d'oxydoréduction qui se produisent sont les réactions inverses de celles se déroulant lors de la charge.

En second lieu, la tension de fonctionnement du condensateur électrochimique selon l'invention est supérieure à celle d'un condensateur symétrique. En effet, le taux atomique de fonctionnalisation plus grand de la surface du carbone sur la première électrode permet d'atteindre des potentiels positifs plus importants, notamment supérieurs à environ 0,6 V vs $Hg/Hg_2SO_4$, lors de la charge. Le potentiel de la deuxième électrode atteint, par exemple, jusqu'à - 1,2 V vs $Hg/Hg_2SO_4$ sans dégagement de dihydrogène, lors de la charge.

Le condensateur selon l'invention comportant un électrolyte aqueux présente ainsi une tension maximale de fonctionnement d'environ 1,8 V.

De ce fait, le condensateur conforme à l'invention présente une densité d'énergie maximale égale à environ 30 $W.h.kg^{-1}$ (kilogramme de matériau carboné des deux électrodes) et une puissance délivrée maximale égale à environ 37,5kW.kg$^{-1}$ (kilogramme de matériau carboné des deux électrodes). Les condensateurs de l'état de la technique ne permettent pas d'atteindre de telles valeurs pour le couple densité d'énergie-puissance délivrée.

Selon un mode de réalisation, l'électrolyte aqueux est choisi parmi les électrolytes aqueux couramment utilisés dans la technique. En particulier, l'électrolyte aqueux est une solution aqueuse basique ou acide, de préférence une solution aqueuse comportant de l'acide sulfurique.

La teneur en acide sulfurique de la solution aqueuse est préférentiellement comprise entre 0,5 et 6 mol.l$^{-1}$, notamment égale à environ 1 mol.l$^{-1}$.

La présence d'électrolyte aqueux dans le condensateur selon l'invention procure une puissance délivrée plus importante et une résistance plus faible que si l'électrolyte est organique. En outre, la tension de fonctionnement du condensateur selon l'invention étant importante, la puissance et l'énergie délivrées par le condensateur selon l'invention sont plus importantes que celles des condensateurs usuels comportant un électrolyte aqueux.

Utiliser une solution aqueuse présente plusieurs autres avantages. L'utilisation d'une solution aqueuse est ainsi moins coûteuse qu'une solution comportant un solvant organique. De plus, l'utilisation d'une solution aqueuse est moins contraignante lors de la mise en oeuvre du condensateur selon l'invention. En particulier, les condensateurs utilisant des électrolytes organiques doivent être fabriqués sous atmosphère exempte de vapeur d'eau. Par ailleurs, les électrolytes organiques présentent l'inconvénient de se décomposer avec émission de gaz nocifs et explosifs, tels que le méthane, l'éthane, le dioxygène, le dihydrogène, le monoxyde de carbone et le dioxyde de carbone, lors de la charge et/ou la décharge du condensateur, ce qui n'est pas le cas des électrolytes aqueux.

Les électrodes comportent chacune du carbone. Selon un mode de réalisation préféré, la première électrode et/ou la deuxième électrode comportent du carbone activé.

Le carbone brut, c'est-à-dire n'ayant subit aucun traitement oxydant ou réducteur, est par exemple choisi parmi les carbones activés SUPER 50® de la société Norit et Maxsorb® de la société Kansai.

Le carbone, activé ou non, est un matériau relativement bon marché et permet avantageusement de diminuer les coûts de fabrication des électrodes.

Les carbones, activés ou non, bruts contiennent en général une teneur en atomes d'oxygène inférieure ou égal à 15%. Les carbones, activés ou non, bruts contiennent en général moins de 2% d'atomes d'azote, de soufre et/ou de phosphore. Dans le cas du carbone activé brut Norit, le carbone comporte environ 4,6 % d'atomes d'oxygène.

De préférence, le carbone activé brut de type Norit est le matériau brut de la première électrode.

Si la surface du carbone brut, activé ou non, n'est pas assez fonctionnalisée, il n'est pas possible de permettre d'augmenter à la fois la capacité et la fenêtre de tension de fonctionnement du condensateur. Pour ce faire, le carbone brut subit un traitement dit « fortement oxydant » augmentant ainsi la fonctionnalisation, notamment le nombre de fonctions telles que les fonctions oxygénées, azotées, soufrées et/ou phosphorées au sein du matériau.

Ainsi, selon un mode de réalisation, le carbone utilisé à la première électrode, activé ou non, est traité par une solution acide oxydante, notamment une solution d'acide nitrique à 30%. A la suite de ce traitement, le taux atomique de fonctionnalisation de la surface du carbone est multiplié par au moins 3 par rapport à celui de la surface du carbone brut.

Selon un autre mode de réalisation, un carbone intrinsèquement riche en hétéroatomes, par exemple en oxygène ou en azote, est utilisé comme matériau brut de la première électrode. On cite à titre d'exemple le carbone brut obtenu par carbonisation de biopolymères issus des algues marines décrit dans la publication Raymundo-Piñero E., Leroux F., Béguin F., A High-Performance Carbon for Supercapacitor Obtained by Carbonization of a Seaweed Biopolymer, Adv. Mat. 2006, 18, 1877-1882.

Lors de la charge, les fonctions oxygénées de surface du carbone de la première électrode interviennent dans des processus redox. Le carbone activé fonctionnalisé peut être utilisé dans la première électrode dans la mesure où le potentiel de destruction de sa texture poreuse par oxydation électrochimique augmente d'environ 0,3 à 0,4 V.

Selon un mode de réalisation, lors de la charge, l'hydrogène issu de la réduction de l'eau sur la deuxième électrode est adsorbé en quantité importante dans les micropores du carbone. En particulier, lors de la charge, grâce à la forte surtension sur la deuxième électrode en carbone, activé ou non, le potentiel de cette électrode est déplacé vers des valeurs plus faibles que -0,62 V vs $Hg/Hg_2SO_4$ à pH=0 sans dégagement de dihydrogène.

Selon un mode de réalisation, le volume massique des micropores de diamètre inférieur ou égal à 0,7 nm du carbone, activé ou non, d'une des électrodes est supérieur à celui de l'autre électrode, en particulier le volume massique des micropores inférieur ou égal à 0,7 nm du carbone, activé ou non, de la deuxième électrode est supérieur à celui du carbone, activé ou non, de la première électrode.

A titre d'exemple, le volume massique des micropores de diamètre inférieur ou égal à 0,7 nm est compris entre 0,1 et 1,2 $cm^3.g^{-1}$, de préférence entre 0,6 $cm^3.g^{-1}$ et 0,8 $cm^3.g^{-1}$, mieux encore entre 0,61 et 0,67 $cm^3.g^{-1}$ pour le carbone, activé ou non, de la deuxième électrode. Le volume massique des micropores de diamètre inférieur ou égal à 0,7 nm est compris entre 0,1 et 1,2 $cm^3.g^{-1}$, de préférence entre 0,2 $cm^3.g^{-1}$ et 0,55 $cm^3.g^{-1}$, mieux encore entre 0,49 et 0,50 $cm^3.g^{-1}$ pour le carbone, activé ou non, de la première électrode. Le volume des micropores de diamètre inférieur ou égal à 0,7 nm est obtenu par le traitement Dubinin-Radushkevitch des isothermes d'adsorption de $CO_2$.

La surface spécifique BET du carbone de la deuxième électrode, déterminée à partir des isothermes d'adsorption de diazote à 77 K, est de préférence comprise entre 50 $m^2.g^{-1}$ et 3600 $m^2.g^{-1}$, notamment entre 3450 $m^2.g^{-1}$ et 3570 $m^2.g^{-1}$, par exemple égale à environ à 3490 $m^2.g^{-1}$. La surface spécifique du carbone de la première électrode est de préférence comprise entre 50 $m^2.g^{-1}$ et 3600 $m^2.g^{-1}$, par exemple environ égalé à 824 $m^2.g^{-1}$.

Selon un mode de réalisation préféré, le carbone, activé ou non, brut de la deuxième électrode subit un léger traitement oxydant ou réducteur. Ce traitement permet d'augmenter la capacité de la deuxième électrode. A titre d'exemple, dans un premier mode de réalisation, le carbone, activé ou non, brut est légèrement oxydé par de l'eau oxygénée à environ 20 % ou, dans un deuxième mode de réalisation, légèrement réduit par un traitement thermique autour de 700°C sous dihydrogène. Après le léger traitement oxydant, le rapport entre les taux atomiques d'oxygène du carbone, activé ou non, de la deuxième électrode et le carbone, activé ou non, brut est inférieur ou égal à 1,5, voire inférieur ou égal à 1,32. Après le traitement réducteur, le rapport entre les taux atomiques d'oxygène du carbone, activé ou non, de la deuxième électrode et le carbone, activé ou non, brut est inférieur ou égal à 0,06.

Selon un mode de réalisation préféré, le condensateur électrochimique comprend en outre un séparateur disposé dans l'électrolyte entre la première et la deuxième électrodes. De préférence, le séparateur est une membrane. Par exemple, le séparateur est un papier en microfibres de verre d'environ 0,18 mm d'épaisseur commercialisé par Fischer Bioblock, France.

Selon un deuxième aspect, l'invention a trait à un procédé de fabrication d'un condensateur électrochimique conforme à l'invention comportant une étape où le carbone de la première électrode est oxydé par une solution acide, notamment une solution aqueuse d'acide nitrique.

Selon un mode de réalisation, le carbone est un carbone activé.

Selon un mode de réalisation, le carbone, activé ou non, est soumis à un traitement fortement oxydant, notamment par une solution d'acide nitrique à environ 30 %. A la suite de ce traitement, le taux atomique de fonctionnalisation est multiplié par au moins 3. En particulier, le taux atomique de fonctionnalisation en oxygène est multiplié par au moins 3.

Selon un mode de réalisation préféré, le procédé comporte en outre une étape où le carbone, activé ou non, de la deuxième électrode subit un traitement oxydant différent du traitement appliqué au carbone, activé ou non, de la première électrode. Après un léger traitement oxydant, le rapport entre les taux atomiques de fonctionnalisation de la surface du carbone, activé ou non, de la deuxième électrode et le carbone, activé ou non, brut est inférieur ou égal à 1,5, voire inférieur ou égal à 1,32 .

En variante, selon un autre mode de réalisation préféré, le procédé comporte une étape où le carbone, activé ou non, de la deuxième électrode subit un traitement réducteur. Après le traitement réducteur, le rapport entre les taux atomiques de fonctionnalisation de la surface du carbone, activé ou non, de la deuxième électrode et le carbone, activé ou non, brut est inférieur ou égal à 0,06.

Selon un troisième aspect, l'invention a pour objet l'utilisation d'un ou de plusieurs condensateurs électrochimiques selon l'invention ou obtenu(s) selon le procédé selon l'invention comme source d'énergie électrique dans un système électronique portable, dans une automobile, dans un tramway, dans un train, dans un avion et/ou dans un système stationnaire tel que les groupes électrogènes.

Selon un mode de réalisation, les condensateurs selon l'invention sont disposés en série.

Selon un quatrième aspect, l'invention porte sur un système électronique portable, une automobile, un système de transport ferré tel qu'un tramway ou un train, un avion et un système stationnaire tel que les groupes électrogènes comportant indépendamment chacun un ou plusieurs condensateurs conforme(s) à l'invention ou obtenu(s) selon le procédé conforme à l'invention.

De façon avantageuse, le ou les condensateurs électrochimiques selon l'invention peuvent être associés à au moins une batterie ou une pile à combustible ou un moteur thermique, grâce à leur grande puissance et leur grande densité d'énergie.

Le condensateur selon l'invention présente l'avantage d'avoir des cycles de charge/décharge rapides. A titre d'exemple, pour un courant massique de 1A.g$^{-1}$, avec une solution à 1 mol.l$^{-1}$ d'acide sulfurique, un cycle de charge/décharge dure environ 280 s. De plus, le condensateur de la présente invention a une durée de vie importante. A titre d'exemple, après 10 000 cycles, la perte de capacité se stabilise à 15%.

Selon un cinquième aspect, l'invention porte sur un circuit électrique comportant, de préférence durant la charge, au moins un condensateur selon l'invention ou obtenu(s) selon le procédé selon l'invention et une source de courant connectée aux bornes du condensateur de sorte que la première électrode est reliée à la borne positive de la source et la deuxième électrode est reliée à la borne négative. Durant la décharge, le condensateur est connecté à un système à alimenter en énergie électrique.

L'invention sera encore davantage illustrée à la lecture des exemples non limitatifs qui vont suivre.

- La figure 1 est un schéma d'un condensateur conforme à l'invention durant la charge.
- La figure 2 est un schéma représentant la double couche électrochimique.
- La figure 3 est un graphique représentant la capacité de décharge d'un condensateur AB conforme à l'invention en fonction du nombre de cycles de charge/décharge.
- La figure 4 est un graphique représentant deux voltammogrammes cycliques du carbone activé A et du carbone activé A oxydé obtenus dans une cellule à trois électrodes.
- La figure 5 est un graphique représentant des voltammogrammes cycliques du carbone activé B obtenus dans une cellule à trois électrodes.
- La figure 6 est un graphique représentant un voltammogramme d'un condensateur conforme à l'invention.

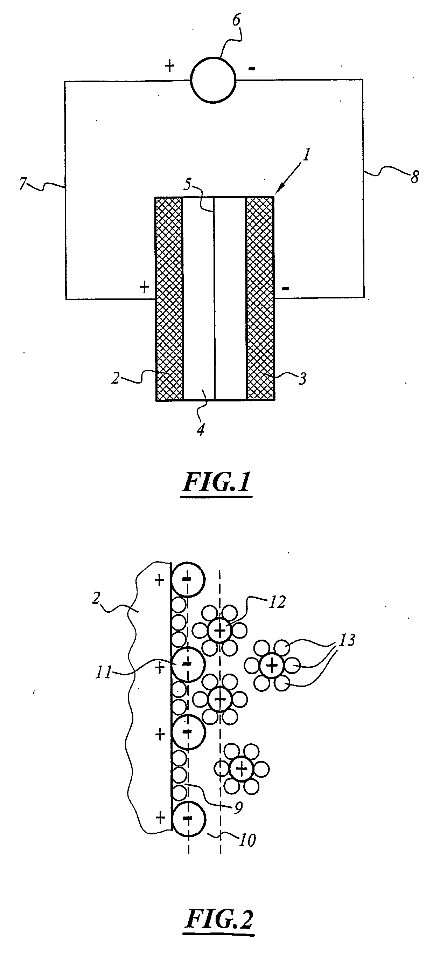

La figure 1 représente un condensateur conforme à l'invention durant la charge. Ce condensateur 1 est dénommé AB par la suite. Ce condensateur comporte :

- une première électrode 2 en carbone activé A ayant subi un traitement fortement oxydant décrit ci-dessous et
- une deuxième électrode 3 en carbone activé B ayant subi un léger traitement oxydant décrit ci-dessous.

Ces deux électrodes 2 et 3 sont disposées en regard et séparées par un espace empli d'un électrolyte 4 formé d'une solution aqueuse d'acide sulfurique à 1 mol.l$^{-1}$.

Un séparateur poreux 5 en papier de microfibres de verre de 0,18 mm d'épaisseur, commercialisé par la société Fischer Bioblock, est disposé dans l'électrolyte 4 entre les deux électrodes 2 et 3 et sépare l'espace contenant l'électrolyte 4 en deux compartiments.

Lors de la charge, la première électrode 2 est reliée au pôle positif d'une source de courant 6 par l'intermédiaire d'un fil conducteur 7. La deuxième électrode 3 est reliée au pôle négatif de la source 6 par l'intermédiaire d'un autre fil conducteur 8. Le stockage des charges s'effectue par deux processus. Le premier processus, montré sur la figure 2, correspond au phénomène de séparation de charges par voie électrostatique. La figure 2 montre spécifiquement la première électrode 2 reliée à la borne positive de la source 6. Lors du passage du courant, une couche 9 comportant les anions 11 se forme dans l'électrolyte 4 à l'interface avec la surface polarisée positivement de l'électrode 2. Une deuxième couche 10 se forme sur cette première couche 9 dans l'électrolyte 4. La deuxième couche 10 comporte des cations 12 qui sont solvatés par le solvant 13 de l'électrolyte. Ces cations 12 migrent ainsi vers l'électrode négative 3 polarisée négativement. Parallèlement à ce phénomène de stockage de charges, des réactions d'oxydoréduction ont aussi lieu au niveau de l'interface de chaque électrode 2 et 3 faisant intervenir en général les groupes quinone/hydroquinone pour les fonctions oxygénées et les couples de fonctions $C=NH/CH-NH_2$ et $C-NHOH/C-NH_2$ pour les fonctions azotées.

Le carbone activé A brut est par exemple du carbone activé SUPER 50® de la société Norit.

Un traitement fortement oxydant lui est appliqué sur sa surface destinée à venir au contact de l'électrolyte 4. Il consiste à mélanger 1 g de carbone activé à 20 ml de $HNO_3$ à 30% pendant 1 heure à 80°C. On obtient ainsi le carbone activé A oxydé. Ensuite, le carbone activé A oxydé est lavé avec de l'eau distillée puis séché à 120°C pendant 12 heures. On obtient alors environ 1g du carbone activé A oxydé.

Le carbone activé B brut est par exemple du carbone activé Maxsorb® de la société Kansai.

Un léger traitement oxydant lui est appliqué sur sa surface destinée à venir au contact de l'électrolyte 4. Il consiste à mélanger 1g de carbone activé avec 40 ml d'$H_2O_2$ à 20 % à température ambiante pendant 1 heure. Ensuite, le carbone obtenu est lavé à l'eau distillée puis séché à 120°C pendant 12 heures. On a obtenu environ 1 g de carbone activé B légèrement oxydé.

Dans une variante, le carbone B subit au lieu du traitement oxydant un léger traitement réducteur consistant à chauffer le carbone activé B brut dans un four à 700°C pendant 1 heure sous une atmosphère de dihydrogène. On obtient alors environ 1 g de carbone activé B réduit.

La composition élémentaire des carbones activés A et B traités ou non, indiquée dans le tableau 1 qui suit, a été obtenue par XPS (X-ray Photoelectron Spectroscopy). Le spectromètre utilisé est le spectromètre VG ESCALAB 250 avec une source monochromatique (15 KV, 15mA) AlK$\alpha$ et un analyseur à multidétection, sous une pression résiduelle de $10^{-8}$ Pa.

Le carbone activé A présente ainsi sous forme oxydée une teneur atomique en oxygène multipliée par environ 3 par rapport au carbone activé A brut et aussi 1,3 % d'atomes d'azote, non présents dans le carbone activé A brut.

Selon le tableau 1, le carbone activé B ayant subi un léger traitement oxydant présente une teneur atomique en oxygène multipliée par environ 1,3 et celui ayant subi un léger traitement réducteur une teneur divisée par un facteur d'environ 16, par rapport au carbone activé B brut.

De plus, les traitements oxydant ou réducteur effectués sur le carbone B n'engendrent pas d'atomes d'azote détectables par l'analyse chimique.

Tableau 1.

| Échantillon | C (at%) | O (at%) | N (at%) |
|---|---|---|---|
| A | 95.4 | 4.6 | - |
| A oxydé par $HNO_3$ | 83.9 | 14.8 | 1.3 |
| B | 95.0 | 5.0 | - |
| B oxydé par $H_2O_2$ | 93.4 | 6.6 | - |
| B réduit par $H_2$ | 99.7 | 0.3 | - |

Le tableau 2 qui suit donne le volume massique microporeux des carbones activés A et B, traités ou non, déterminé à partir des isothermes d'adsorption de dioxyde de carbone à 273K (Autosorb, Quantachrome®).

Ainsi, le carbone activé A oxydé présente un volume massique microporeux d'environ 0,5 cm³.g⁻¹.

Le carbone activé B légèrement oxydé ou réduit présente un volume massique microporeux compris entre 0,61 et 0,67 cm³.g⁻¹.

Le carbone activé B légèrement oxydé ou réduit comporte plus de micropores par gramme de carbone que le carbone activé A oxydé.

Tableau 2.

| Échantillon | $V_{micro}$[a] $d<0.7nm$ $(cm^3/g)$ |
|---|---|
| A | 0.49 |
| A oxydé par $HNO_3$ | 0.50 |
| B | 0.67 |
| B oxydé par $H_2O_2$ | 0.61 |
| B réduit par $H_2$ | 0.66 |

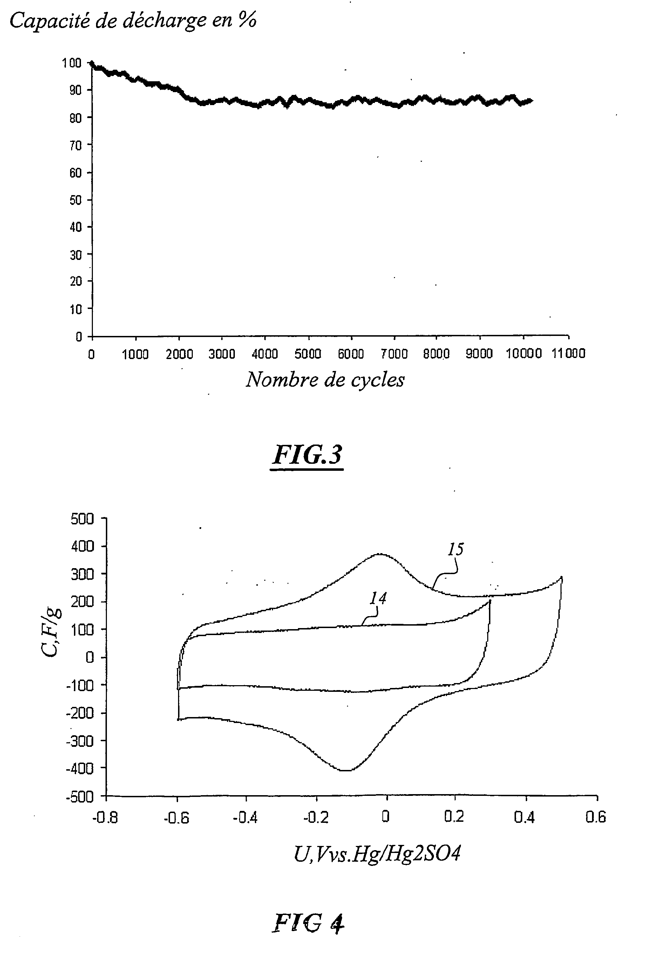

La figure 3 montre l'évolution de la capacité du condensateur AB sous une tension maximale de fonctionnement de 1,6 V avec une densité de courant de 1 A.g⁻¹ au cours d'environ 10000 cycles. Cette tension permet de façon avantageuse d'éviter la formation de gaz au sein du condensateur, tels que le dihydrogène ou le dioxygène, qui limiteraient le fonctionnement de ce dernier.

La diminution de 15 % de la capacité durant les 2 000 premiers cycles correspond à la phase transitoire. Cette période est appelée phase de conditionnement du condensateur.

Durant les 8 000 autres cycles correspondant à la phase stationnaire, la capacité reste à peu près constante, indiquant ainsi une grande stabilité au cours des cycles de charge/décharge et une grande durée de vie du condensateur AB.

La densité d'énergie est environ 10 fois supérieure à celle d'un condensateur symétrique comportant un électrolyte aqueux.

**Etude des carbones activés appliqués pour la première électrode reliée au pôle positif d'une source de courant (électrode positive)**

On étudie de façon plus précise le comportement électrochimique des deux carbones activés A et B dans un condensateur symétrique en utilisant comme électrolyte de l'acide sulfurique à 1 mol. l$^{-1}$. La capacité est de l'ordre de 101 F/g pour A et de 230 F/g pour B.

Les carbones activés A et B ont été oxydés avec l'acide nitrique à 30% en vue d'augmenter leur capacité.

Les voltammogrammes cycliques de la figure 4 ont été obtenus en utilisant une cellule à trois électrodes dans une solution à 1 mol.l$^{-1}$ d'acide sulfurique. Les voltammogrammes cycliques correspondent au voltammogramme cyclique du carbone activé A brut 14 et à celui du carbone activé A fortement oxydé 15.

Selon la figure 4, la capacité du carbone activé A augmente de 110 F/g à 214 F/g lorsque le carbone activé A a subi le traitement fortement oxydant.

En revanche, la capacité du carbone activé B diminue de 230 à 180 F/g lorsque le carbone activé B a subi le traitement fortement oxydant. En effet, la texture poreuse du carbone activé B est détruite lors du traitement fortement oxydant.

Pour l'échantillon A oxydé, la gamme de potentiel de l'électrode est déplacée vers des potentiels plus positifs. En effet, le potentiel maximal d'utilisation de l'électrode passe d'environ 0,3 à 0,6 V vs Hg/Hg$_2$SO$_4$ lorsque le carbone activé A est oxydé. Les fonctions oxygénées de A oxydé sont impliquées dans des processus d'oxydoréduction se déroulant à des potentiels compris dans la gamme de fonctionnement de l'électrode positive du condensateur. Ces processus d'oxydoréduction contribuent à améliorer la capacité du matériau.

**Etude des carbones activés appliqués pour la deuxième électrode reliée au pôle négatif d'une source (électrode négative)**

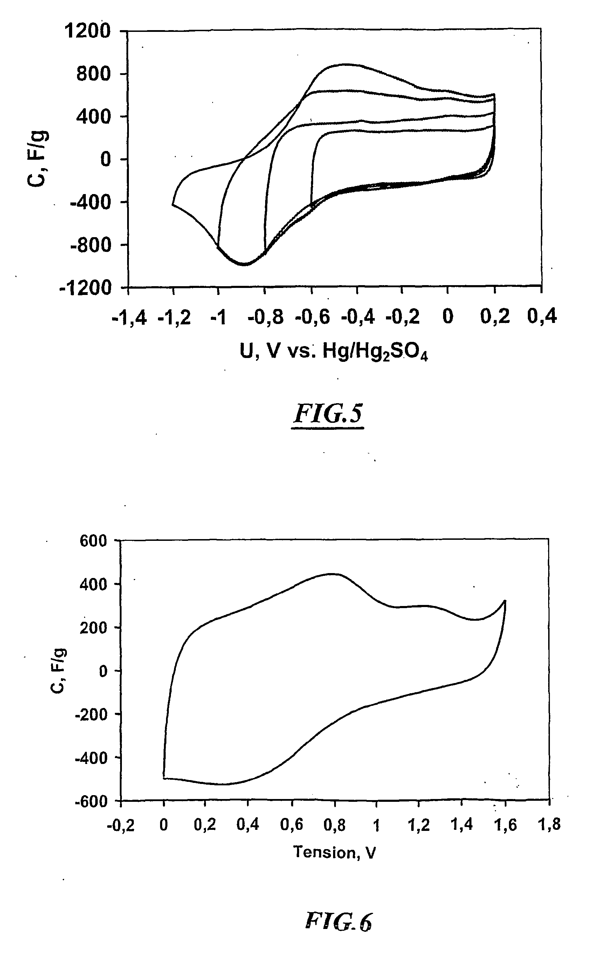

Les voltammogrammes représentés sur la figure 5 sont des voltammogrammes effectués dans les mêmes conditions que les voltammogrammes de la figure 4.

Selon la figure 5, deux effets se produisent à cette électrode quand elle est polarisée à des valeurs négatives du potentiel. Le premier effet se manifeste par une importante surtension d'apparition du dihydrogène, ce qui permet d'augmenter de façon significative la fenêtre de potentiel lorsqu'un carbone activé est utilisé comme électrode négative. Dans le cas du carbone activé B, la surtension entraînant la formation de dihydrogène est supérieure à celle du carbone activé A et est environ égale à 0,6 V. Le deuxième effet se traduit par une augmentation de la capacité, parce que l'hydrogène produit par la réduction de l'eau est immédiatement adsorbé dans les pores du carbone B et est réversiblement électro-oxydé durant l'oxydation anodique. Dans ce cas, les propriétés pseudo-capacitives du carbone activé B sont liées aux mécanismes d'oxydoréduction de l'hydrogène dans les pores. Le carbone activé B brut, ou prétraité par un léger traitement oxydant ou réducteur présente une capacité d'environ 600 F.g$^{-1}$.

**Le système non symétrique**

Au vu des résultats précédents, il est intéressant de construire un système asymétrique utilisant deux carbones activés différents mais comportant une masse sensiblement identique de carbones. L'électrode négative comporte le carbone activé B brut ou prétraité par un léger traitement oxydant ou réducteur, lequel présente une capacité d'environ 600 F.g$^{-1}$. L'électrode positive comporte le carbone activé A fortement oxydé, lequel présente une capacité d'environ 300 F.g$^{-1}$

La figure 6 illustre un exemple utilisant de telles électrodes dans un condensateur AB conforme à l'invention. Le voltammogramme est effectué dans une cellule non symétrique à deux électrodes comportant la même masse de carbone en utilisant une solution à 1 mol.l$^{-1}$ de H$_2$SO$_4$ comme électrolyte.

Selon la figure 6, la combinaison de ces électrodes basée sur la présence des carbones activés A et B plus ou moins oxydés permet d'obtenir une tension maximale de la cellule d'environ 1,6 Volts sans que l'électrolyte se décompose ou que le carbone activé de l'électrode positive soit oxydé irréversiblement.

Dans ces conditions, la gamme de potentiel couverte par l'électrode négative est comprise entre -0,25 et -0,97 V vs Hg/Hg$_2$SO$_4$ et celle couverte par l'électrode positive est comprise entre -0,25 et 0,63 V vs Hg/Hg$_2$SO$_4$. La capacité totale du condensateur est augmentée du fait que les réactions d'oxydoréduction se produisant à chaque électrode sont différentes et se produisent dans des gammes de potentiels différentes et optimales.

**Revendications**

1. Condensateur électrochimique (1) comportant une première électrode (2) et une deuxième électrode (3) comprenant chacune du carbone et un électrolyte aqueux (4) situé à l'interface des deux électrodes, **caractérisé en ce que** la surface du carbone de la première électrode (2) présente un taux atomique de fonctionnalisation multiplié par un facteur égal à au moins 2 par rapport au taux atomique de fonctionnalisation de la surface du carbone de la deuxième électrode (3).

2. Condensateur électrochimique selon la revendication 1, **caractérisé en ce que** la surface du carbone est fonctionnalisée par des fonctions oxygénées, azotées, soufrées et/ou phosphorées.

**3.** Condensateur électrochimique selon l'une quelconque des revendications précédentes, **caractérisé en ce que** la première électrode (2) et/ou la deuxième électrode (3) comportent du carbone activé.

**4.** Condensateur électrochimique selon l'une quelconque des revendications précédentes, **caractérisé en ce que** le volume massique des micropores de diamètre inférieur ou égal à 0,7 nm du carbone de la deuxième électrode (3) est supérieur à celui du carbone de la première électrode (2).

**5.** Condensateur électrochimique selon l'une quelconque des revendications précédentes, **caractérisé en ce que** le volume massique des micropores de diamètre inférieur ou égal à 0,7 nm est compris entre 0,1 cm$^3$.g$^{-1}$ et 1,2 cm$^3$.g$^{-1}$ pour le carbone de la deuxième électrode (3).

**6.** Condensateur électrochimique selon l'une quelconque des revendications 1 à 4, **caractérisé en ce que** le volume massique des micropores de diamètre inférieur ou égal à 0,7 nm est compris entre 0,1 cm$^3$.g$^{-1}$ et 1,2 cm$^3$.g$^{-1}$ pour le carbone de la première électrode (2).

**7.** Condensateur électrochimique selon l'une quelconque des revendications précédentes, **caractérisé en ce qu'**il comprend en outre un séparateur (5) disposé dans l'électrolyte (4) entre la première (2) et la deuxième (3) électrodes.

**8.** Condensateur électrochimique selon l'une quelconque des revendications précédentes, **caractérisé en ce que** l'électrolyte aqueux est une solution aqueuse comportant de l'acide sulfurique.

**9.** Procédé de fabrication d'un condensateur électrochimique selon l'une quelconque des revendications précédentes, **caractérisé en ce qu'**il comporte une étape où le carbone de la première électrode (2) est oxydé par une solution acide.

**10.** Procédé selon la revendication précédente, **caractérisé en ce que** le carbone est activé.

**11.** Procédé selon la revendication 9 ou 10, **caractérisé en ce que** la solution acide est une solution aqueuse d'acide nitrique.

**12.** Procédé selon l'une quelconque des revendications 9 à 11, **caractérisé en ce qu'**il comporte en outre une étape où le carbone de la deuxième électrode (3) subit un traitement oxydant différent du traitement appliqué au carbone de la première électrode (2).

**13.** Procédé selon l'une quelconque des revendications 9 à 12, **caractérisé en ce qu'**il comporte une étape où le carbone de la deuxième électrode (3) subit un traitement réducteur.

**14.** Système électronique portable **caractérisé en ce qu'**il comporte un ou plusieurs condensateurs (1) selon l'une quelconque des revendications 1 à 8 ou obtenu(s) selon le procédé selon l'une quelconque des revendications 9 à 13.

**15.** Automobile **caractérisée en ce qu'**elle comporte un ou plusieurs condensateurs (1) selon l'une quelconque des revendications 1 à 8 ou obtenu(s) selon le procédé selon l'une quelconque des revendications 9 à 13.

**16.** Système de transport ferré **caractérisé en ce qu'**il comporte un ou plusieurs condensateurs (1) selon l'une quelconque des revendications 1 à 8 ou obtenu (s) selon le procédé selon l'une quelconque des revendications 9 à 13.

**17.** Avion **caractérisé en ce qu'**il comporte un ou plusieurs condensateurs (1) selon l'une quelconque des revendications 1 à 8 ou obtenu(s) selon le procédé selon l'une quelconque des revendications 9 à 13.

**18.** Système stationnaire **caractérisé en ce qu'**il comporte un ou plusieurs condensateurs (1) selon l'une quelconque des revendications 1 à 8 ou obtenu(s) selon le procédé selon l'une quelconque des revendications 9 à 13.

**19.** Circuit électrique comportant au moins un condensateur (1) selon l'une quelconque des revendications 1 à 8 ou obtenu(s) selon l'une quelconque des revendications 9 à 13 et une source de courant (6) connecté aux bornes du condensateur de sorte que la première électrode (2) est reliée à la borne positive de la source (6) et la deuxième électrode (3) est reliée à la borne négative.

**Claims**

**1.** Electrolytic capacitor (1) comprising a first electrode (2) and a second electrode (3) each comprising carbon and an aqueous electrolyte (4) situated at the interface of the two electrodes, **characterised in that** the carbon surface of the first electrode (2) has an atomic degree of functionalisation which is at least twice that of the carbon surface of the second electrode (3).

**2.** Electrolytic capacitor according to claim 1, **characterised in that** the carbon surface is functionalised by oxygenated, nitrogenous, sulphurous and/or phosphorous functions.

**3.** Electrolytic capacitor according to any one of the preceding claims, **characterised in that** the first electrode (2) and/or the second electrode (3) comprise activated carbon.

**4.** Electrolytic capacitor according to any one of the preceding claims, **characterised in that** the specific volume of the micropores having a diameter of at most 0.7 nm of the carbon of the second electrode (3) is greater than that of the carbon of the first electrode (2).

**5.** Electrolytic capacitor according to any one of claims, **characterised in that** the specific volume of the micropores having a diameter of at most 0.7 nm is between 0.1 cm$^3$ g$^{-1}$ and 1.2 cm$^3$ g$^{-1}$ in the case of the carbon of the second electrode (3).

**6.** Electrolytic capacitor according to any one of the preceding claims 1 to 4, **characterised in that** the specific volume of the micropores having a diameter of at most 0.7 nm is between 0.1 cm$^3$ g$^{-1}$ and 1.2 cm$^3$ g$^{-1}$ in the case of the carbon of the first electrode (2).

**7.** Electrolytic capacitor according to any one of the preceding claims, **characterised in that** it further comprises a separator (5) arranged in the electrolyte (4) between the first (2) and second (3) electrodes.

**8.** Electrolytic capacitor according to any one of the preceding claims, **characterised in that** the aqueous electrolyte is an aqueous solution comprising sulphuric acid.

**9.** Process for producing an electrolytic capacitor according to any one of the preceding claims, **characterised in that** it comprises a stage where the carbon of the first electrode (2) is oxidised by an acidic solution.

**10.** Process according to claim 9, **characterised in that** the carbon is activated.

**11.** Process according to either claim 9 or claim 10, **characterised in that** the acidic solution is an aqueous solution of nitric acid.

**12.** Process according to any one of claims 9 to 11, **characterised in that** it also comprises a stage where the carbon of the second electrode (3) undergoes an oxidising treatment different from the treatment applied to the carbon of the first electrode (2).

**13.** Process according to any one of claims 9 to 12, **characterised in that** it comprises a stage where the carbon of the second electrode (3) undergoes a reducing treatment.

**14.** Portable electronic system **characterised in that** it comprises one or more capacitors (1) according to any one of claims 1 to 8 or obtained by the process according to any one of claims 9 to 13.

**15.** Motor vehicle **characterised in that** it comprises one or more capacitors (1) according to any one of claims 1 to 8 or obtained by the process according to any one of claims 9 to 13.

**16.** Rail transport system **characterised in that** it comprises one or more capacitors (1) according to any one of claims 1 to 8 or obtained by the process according to any one of claims 9 to 13.

**17.** Aircraft **characterised in that** it comprises one or more capacitors (1) according to any one of claims 1 to 8 or obtained by the process according to any one of claims 9 to 13.

**18.** Stationary system **characterised in that** it comprises one or more capacitors (1) according to any of claims 1 to 8 or obtained by the process according to any one of claims 9 to 13.

**19.** Electrical circuit comprising at least one capacitor (1) according to any one of claims 1 to 8 obtained according to any one of claims 9 to 13 and a power supply source (6) connected to the terminals of the capacitor in such a way that the first electrode (2) is connected to the positive terminal of the source (6) and the second electrode (3) is connected to the negative terminal.

**Patentansprüche**

**1.** Elektrochemischer Kondensator (1), umfassend eine erste Elektrode (2) und eine zweite Elektrode (3), die jeweils Kohlenstoff und einen wässrigen Elektrolyten (4), der sich an der Grenzfläche der beiden Elektroden befindet, umfassen, **dadurch gekennzeichnet, dass** die Fläche des Kohlenstoffs der ersten Elektrode (2) im Vergleich zu dem atomaren Funktionalisierungsgrad der Fläche des Kohlenstoffs der zweiten Elektrode (3) einen atomaren Funktionalisierungsgrad multipliziert mit einem Faktor gleich wenigstens 2 aufweist.

**2.** Elektrochemischer Kondensator nach Anspruch 1, **dadurch gekennzeichnet, dass** die Fläche des Kohlenstoffs durch Sauerstoff-, Stickstoff-, Schwefel- und/oder Phosphor-Funktionen funktionalisiert ist.

**3.** Elektrochemischer Kondensator nach einem der vorhergehenden Ansprüche, **dadurch gekennzeichnet, dass** die erste Elektrode (2) und/oder die zweite Elektrode (3) aktivierten Kohlenstoff umfassen.

4. Elektrochemischer Kondensator nach einem der vorhergehenden Ansprüche, **dadurch gekennzeichnet, dass** das spezifische Volumen der Mikroporen mit einem Durchmesser kleiner oder gleich 0,7 nm des Kohlenstoffs der zweiten Elektrode (3) größer als das des Kohlenstoffs der ersten Elektrode (2) ist.

5. Elektrochemischer Kondensator nach einem der vorhergehenden Ansprüche, **dadurch gekennzeichnet, dass** das spezifische Volumen der Mikroporen mit einem Durchmesser kleiner oder gleich 0,7 nm im Bereich zwischen 0,1 $cm^3.g^{-1}$ und 1,2 $cm^3.g^{-1}$ für den Kohlenstoff der zweiten Elektrode (3) liegt.

6. Elektrochemischer Kondensator nach einem der Ansprüche 1 bis 4, **dadurch gekennzeichnet, dass** das spezifische Volumen der Mikroporen mit einem Durchmesser kleiner oder gleich 0,7 nm im Bereich zwischen 0,1 $cm^3.g^{-1}$ und 1,2 $cm^3.g^{-1}$ für den Kohlenstoff der ersten Elektrode (2) liegt.

7. Elektrochemischer Kondensator nach einem der vorhergehenden Ansprüche, **dadurch gekennzeichnet, dass** er ferner einen Separator (5) umfasst, der in dem Elektrolyten (4) zwischen der ersten (2) und der zweiten (3) Elektrode angeordnet ist.

8. Elektrochemischer Kondensator nach einem der vorhergehenden Ansprüche, **dadurch gekennzeichnet, dass** der wässrige Elektrolyt eine Schwefelsäure umfassende wässrige Lösung ist.

9. Verfahren zur Herstellung eines elektrochemischen Kondensators nach einem der vorhergehenden Ansprüche, **dadurch gekennzeichnet, dass** es einen Schritt umfasst, bei dem der Kohlenstoff der ersten Elektrode (2) durch eine saure Lösung oxidiert wird.

10. Verfahren nach dem vorhergehenden Anspruch, **dadurch gekennzeichnet, dass** der Kohlenstoff aktiviert ist.

11. Verfahren nach Anspruch 9 oder 10, **dadurch gekennzeichnet, dass** die saure Lösung eine wässrige Salpetersäurelösung ist.

12. Verfahren nach einem der Ansprüche 9 bis 11, **dadurch gekennzeichnet, dass** es ferner einen Schritt umfasst, bei dem der Kohlenstoff der zweiten Elektrode (3) einer von der auf den Kohlenstoff der ersten Elektrode (2) angewandten Behandlung abweichenden Oxidationsbehandlung unterzogen wird.

13. Verfahren nach einem der Ansprüche 9 bis 12, **dadurch gekennzeichnet, dass** es einen Schritt umfasst, bei dem der Kohlenstoff der zweiten Elektrode (3) einer Reduktionsbehandlung unterzogen wird.

14. Tragbares elektronisches System, **dadurch gekennzeichnet, dass** es einen oder mehrere Kondensatoren (1) nach einem der Ansprüche 1 bis 8 oder erhalten nach dem Verfahren nach einem der Ansprüche 9 bis 13 umfasst.

15. Kraftfahrzeug, **dadurch gekennzeichnet, dass** es einen oder mehrere Kondensatoren (1) nach einem der Ansprüche 1 bis 8 oder erhalten nach dem Verfahren nach einem der Ansprüche 9 bis 13 umfasst.

16. Schienentransportsystem, **dadurch gekennzeichnet, dass** es einen oder mehrere Kondensatoren (1) nach einem der Ansprüche 1 bis 8 oder erhalten nach dem Verfahren nach einem der Ansprüche 9 bis 13 umfasst.

17. Flugzeug, **dadurch gekennzeichnet, dass** es einen oder mehrere Kondensatoren (1) nach einem der Ansprüche 1 bis 8 oder erhalten nach dem Verfahren nach einem der Ansprüche 9 bis 13 umfasst.

18. Stationäres System, **dadurch gekennzeichnet, dass** es einen oder mehrere Kondensatoren (1) nach einem der Ansprüche 1 bis 8 oder erhalten nach dem Verfahren nach einem der Ansprüche 9 bis 13 umfasst.

19. Stromkreis, der wenigstens einen Kondensator (1) nach einem der Ansprüche 1 bis 8 oder erhalten nach einem der Ansprüche 9 bis 13 sowie eine Stromquelle (6) umfasst, die an die Anschlüsse des Kondensators angeschlossen ist, so dass die erste Elektrode (2) mit dem Pluspol der Quelle (6) und die zweite Elektrode (3) mit dem Minuspol verbunden ist.

_**FIG.1**_

_**FIG.2**_

Capacité de décharge en %

FIG.3

FIG 4

*FIG.5*

*FIG.6*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2800616 A
- US 3288641 A
- US 4313084 A
- US 4562511 A
- US 4251568 A

**Littérature non-brevet citée dans la description**

- **RAYMUNDO-PIÑERO E. ; LEROUX F. ; BÉGUIN F.** A High-Performance Carbon for Supercapacitor Obtained by Carbonization of a Seaweed Biopolymer. *Adv. Mat.,* 2006, vol. 18, 1877-1882